**Europäisches Patentamt**

**European Patent Office**

**Office européen des brevets**

(11) Publication number: **0 504 183 B1**

# EUROPEAN PATENT SPECIFICATION

(45) Date of publication of patent specification: **17.08.94**  (51) Int. Cl.5: **C09D 163/00**, C08G 59/42, C09D 5/03

(21) Application number: **90917688.5**

(22) Date of filing: **04.12.90**

(86) International application number: **PCT/GB90/01884**

(87) International publication number: **WO 91/08268 (13.06.91 91/13)**

(54) **POWDER COATINGS BASED ON EPOXY RESINS.**

(30) Priority: **04.12.89 GB 8927375**

(43) Date of publication of application: **23.09.92 Bulletin 92/39**

(45) Publication of the grant of the patent: **17.08.94 Bulletin 94/33**

(84) Designated Contracting States: **AT BE CH DE DK ES FR GB GR IT LI LU NL SE**

(56) References cited:
EP-A- 0 123 797
EP-A- 0 198 226
EP-A- 0 366 608
DE-C- 2 922 377
GB-A- 1 544 610

(73) Proprietor: **THOMAS SWAN AND CO., LTD.**
**Crookhall**
**Consett, Co. Durham DH8 7ND (GB)**

(72) Inventor: **RICHARDSON, Frank Barnett**
**Derwent Hill Cottage**
**East Law**
**Ebchester Consett Durham DH8 0OH (GB)**
Inventor: **SPOOR, Joseph**
**19 West Thornes Walk**
**Whickham**
**Tyne and Wear NE16 4LH (GB)**
Inventor: **WATSON, Peter Joseph**
**128 Albert Road**
**Jarrow**
**Tyne and Wear NE32 5AG (GB)**

(74) Representative: **Sanderson, Nigel Paul et al**
**Haseltine Lake & Co.**
**Hazlitt House**
**28, Southampton Buildings**
**Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to the production of powder coatings and in particular to the production of matt or semi gloss epoxy based powder coatings.

Coatings based on epoxy resins which are thermally cured with a variety of cross linking agents are well known and the nature of the cross linking agent has a significant effect on the properties of the cured coating. These properties include chemical resistance, appearance, gloss value and mechanical properties. Of particular importance are methods of producing matt or semi gloss coatings. Such coatings have conventionally been produced by careful selection and incorporation into the epoxy based powder coating composition of specific fillers traditionally referred to as matting agents. Alternatively, particular cross linking agents chemically chosen to give matt or semi gloss coatings have been used. However, the use of such matting agents is not always desirable because of problems of incorporating such materials into the composition and because the high loadings required can have a detrimental effect on the physical properties of the coating. Furthermore, available cross-linking agents for the production of matt or semi gloss coatings often give inconsistent gloss values under the same curing conditions.

By means of the present invention matt or semi gloss epoxy coatings can be made whilst avoiding the inherent difficulties associated with the previously known methods described above.

The inventors have shown that by crosslinking epoxy resins by means of curing agents comprising a polyfunctional acid in combination with a suitable accelerator, semi-gloss or matt epoxy powder coatings can be consistently produced.

According to a first aspect of the invention there is provided a curing agent for an epoxy resin based powder coating composition characterised in that the curing agent comprises

i) at least one polyfunctional carboxylic acid selected from the group comprising butanetetracarboxylic acid, cyclopentanetetracarboxylic acid, nitrilo triacetic acid, citric acid, aconitic acid, trimellitic acid, pyromellitic acid, trimesic acid, ethylene diamine tetra acetic acid, diethylene triamine penta acetic acid, and mixtures thereof

ii) a nitrogen containing accelerator selected from the group comprising substituted ureas, substituted imidazoles, substituted imidazolines, ureides, hydrazides and hexamethylene tetramine, provided that, in the case where the said accelerator is an imidazoline, the accelerator is not present as a salt of the acid, and

iii) optionally, at least one difunctional carboxylic acid selected from the group comprising isophthalic acid, terephthalic acid, oxalic acid, succinic acid, adipic acid, citraconic acid, and itaconic acid.

According to a second aspect of the present invention there is provided a method of curing an epoxy resin based powder coating composition comprising mixing the epoxy resin composition with a curing agent as hereinabove defined, and curing the mixture at elevated temperature. Preferably the mixture is cured at a temperature of 170 to 220°C.

Compositions comprising polyfunctional acids chosen from one or more of the following acids are particularly preferred:- pyromellitic, trimesic and terephthalic acids, ethylene diamine tetra acetic acid, diethylene triamine penta acetic acid and nitrilotriacetic acid. A substituted urea or hexamethylene tetramine or a combination thereof are the preferred accelerator.

The proportions of the individual components of the composition have a significant effect on the final level of gloss. For example, a low level of gloss can be achieved by using a high level of tetra functional acid, or by using a trifunctional carboxyl compound when accelerated with a compound including an amine functionality. Certain mixtures of the polyfunctional acids are also preferred for economic and performance reasons.

In use, the mixtures described, in combination with a suitable accelerator are pre-blended with epoxy resin, and if desired with fillers, pigments, and other additives often used in the coating industry. The blended materials are then extruded and finally ground. The final ground material can then be electrostatically sprayed and thermally cured to give a tough, high performance coating with varying levels of gloss depending upon the composition of the starting material. The ratio of curing agent to the epoxy resin component, the extrusion technique, the curing temperature and the curing times are chosen to attain specific and consistent properties of the coating.

The curing temperature is preferably in the range of from 170°C to 220°C and is particularly preferably in the range of from 190°C to 200°C. The ratio of the curing agent to the epoxy resin is dependent upon the epoxy equivalent weight of the epoxy resin and is usually between 3 and 10 parts by weight of said curing agent to 100 parts by weight of the epoxy resin (referred to hereinafter as phr).

Suitable accelerators include 2-methyl imidazole, 2-phenyl imidazole, 2-ethyl-4-methylimidazole, 1-H-imidazole, 1-vinylimidazole, 2-aminoimidazole, 1-benzoylimidazole, 2-ethylimidazole, 2,4-dimethyl imidazole,

2

**EP 0 504 183 B1**

2-benzylimidazole, 1,2,-dimethylimidazole, certain hydrazides, certain ureides, certain urones including 3-(4-chlorophenyl)-1,1-dimethylurea, 3-(3,4-dichlorophenyl)-1,1-dimethylurea, 3-phenyl-1,1-dimethylurea, 3-(3-chloro-4-methylphenyl)-1,1-dimethyl urea and toluene-2,4-bis (N,N-dimethylcarbamide) and hexamethyl tetramine. 3-phenyl-1,1-dimethylurea and hexamethyl tetramine are particularly preferred.

The epoxy resins with which the curing agents of the invention are used will be ordinarily solid polyepoxides containing more than one epoxy group per molecule. Such polyepoxides are the polyglycidyl ethers of aromatic or aliphatic polyhydric compounds for example resorcinol, hydroquinone, pyrocatechol, bisphenol A, bisphenol F, glycerol, pentaerythritol, mannitol, sorbitol and trimethylol propane. The most suitable polyepoxides are those based on the reaction between bisphenol A or bisphenol F with epichlorhydrin.

The following examples illustrate the invention.

EXAMPLE 1

Curing agents A, B and C were prepared by blending the components as shown in Table 1 in a suitable mixer followed by grinding in a rotating hammer mill. Grinding was continued until at least 95% of the blended components passed through a 75 micron sieve.

Table 1

|  | A | B | C |
|---|---|---|---|
| Pyromellitic acid | 45 | 40 | 35 |
| Terephthalic acid | 35 | 40 | 45 |
| 1,1-dimethyl-3-phenyl urea | 20 | 20 | 20 |
|  | 100 | 100 | 100 |

The above curing agents were converted into epoxy powder paints using the formulation shown in Table 2 and the following method.

Table 2

| Paint Formulation | |
|---|---|
| Epoxy Resin (EEW 850-1000) | 100.0 parts by wt |
| Titanium dioxide | 33.0 parts by wt |
| Modaflow Powder 2 | 0.8 parts by wt |
| Tripenta stearate | 0.5 parts by wt |
| Curing Agent | Variable |

Method

All the powdered components were mixed together and passed through an extruder at a temperature of 80-100°C. The extruded mixture was then allowed to cool and ground using a rotating hammer mill until the particle size was less then 125 microns.

Paints were made as indicated in Table 2 above using curing agents A, B and C at varying phr as shown in Table 3. These paints were then electrostatically sprayed onto steel panels and stoved for 10 mins at 200°C. The level of gloss achieved was measured using a 60° Specular Gloss Meter.

3

EP 0 504 183 B1

Table 3

| | % Gloss (60°) | | |
|---|---|---|---|
| phr | Curing Agents | | |
| | A | B | C |
| 5.5 | 11 | 40 | 75 |
| 6.0 | 11 | 38 | 27 |
| 6.5 | 13 | 22 | 45 |
| 7.0 | 20 | 21 | 56 |

As can be seen from Table 3, low levels of gloss can be achieved by means of the curing agents of the present invention when they are used in appropriate amounts.

Example 2

The following curing agents (D-H) were made following the method of Example 1 using the components shown in Table 4.

Table 4

| | D | E | F | G | H |
|---|---|---|---|---|---|
| EDTA | 80 | 75 | 67 | - | - |
| Trimesic acid | - | - | - | 80 | 75 |
| 1,1 dimethyl-3-phenyl urea | 20 | 25 | 33 | 20 | 25 |
| | 100 | 100 | 100 | 100 | 100 |

The above curing agents were converted into paints as in Example 1 and using a phr of 6.0. The gloss levels shown in Table 5 were obtained on the resultant stoved panels.

Table 5

| | Curing Agent | | | | |
|---|---|---|---|---|---|
| | D | E | F | G | H |
| % Gloss (60°) | 6 | 7 | 10 | 5 | 7 |

Example 3

The following curing agents (I - L) were made following the method of Example 1 using the components shown in Table 6.

4

Table 6

|  | I | J | K | L |
|---|---|---|---|---|
| EDTA | 75 | 50 | - | 80 |
| Pyromellitic acid | - | - | 50 | - |
| Trimellitic acid | - | - | 25 | - |
| 2-Phenylimidazole | 25 | 50 | 25 | - |
| 2-Methylimidazole | - | - | - | 20 |

The above curing agents were converted into paints as in Example 1 and using a phr of 6.0. The gloss levels shown in Table 7 were obtained on the resultant stoved panels.

Table 7

|  | Curing Agent | | | |
|---|---|---|---|---|
|  | I | J | K | L |
| % Gloss (60°C) | 14 | 28 | 30 | 29 |

Example 4

The following physical properties were obtained on the stoved film using curing agent C at a phr of 6.5 cured for 10 minutes at 200°C.

| | |
|---|---|
| Impact (Reverse) ASTM D2794.84 | 60 inch/pound |
| Mandrel Bend Test (BS 3900:E1) | - Pass 3mm |
| MEK Rub Test | - 100 rubs/slight softening |
| Cross hatch adhesion test (BS 3900:E6) | - 0 |
| Overbake properties | - Good |
| Taber Abrasion (ASTM 1kg/100 revs/CS17 wheel) | - 10.4 mgs |

Example 5

The following curing agents (M-P) were made following the method of Example 1, using the components shown in Table 8.

Table 8

|  | M | N | O | P |
|---|---|---|---|---|
| Pyromellitic acid | 55 | - | - | - |
| Terephthalic acid | 40 | - | - | - |
| E.D.T.A. | - | 85 | 90 | - |
| Nitrilo Triacetic Acid | - | - | - | 91.2 |
| 1,1-dimethyl 3-phenyl urea | 5 | - | - | - |
| Hexamethylene tetramine | - | 15 | 10 | 8.8 |
|  | 100 | 100 | 100 | 100 |

Paints were prepared from the above curing agents as in Example 1 and when cured and tested, as shown below, gave the following properties as shown in Table 9.

5

Table 9

| | Properties | | | |
|---|---|---|---|---|
| | M | N | O | P |
| phr | 6.5 | 8.0 | 8.0 | 8.0 |
| Stoving Conditions Time (mins) | 20 | 20 | 20 | 20 |
| Object temperature °C | 180 | 180 | 190 | 180 |
| % Gloss (60°C) | 21 | 16 | 10 | 6 |
| Impact (Reverse) inch | >80 | >80 | >80 | >80 |
| MEK Rub test (100 rubs) | Pass | Pass | Pass | Pass |
| Mandrel Bend Test (BS 3900:E1) | Pass 3mm | Pass 3mm | Pass 3mm | Pass 3mm |

Example 6

A matt black paint was made to the following formulation using the method given in Example 1.

|  | Parts by weight |
|---|---|
| Epoxy Resin (E.E.W. 715-750) | 59.30 |
| Calcite | 33.03 |
| Carbon Black | 2.01 |
| Modaflow Powder 2 | 0.96 |
| Curing Agent 'O' | 4.70 |
|  | 100.00 |

The paint was sprayed onto a metal panel and stoved for 20 mins, object temperature at 190°C, and had the following properties:

| phr | 7.9 |
|---|---|
| % Gloss (60°) | 6 |
| Reverse impact (80 inch pounds) | Pass |
| MEK double rubs (100) | Pass |

**Claims**

**Claims for the following Contracting States : AT, BE, CH, DE, DK, FR, GB, GR, IT, LI, LU, NL, SE**

1. A curing agent for an epoxy resin based powder coating composition characterised in that the curing agent comprises

   i) at least one polyfunctional carboxylic acid selected from the group comprising butanetetracarboxylic acid, cyclopentanetetracarboxylic acid, nitrilo triacetic acid, citric acid, aconitic acid, trimellitic acid, pyromellitic acid, trimesic acid, ethylene diamine tetra acetic acid, diethylene triamine penta acetic acid, and mixtures thereof

   ii) a nitrogen containing accelerator selected from the group comprising substituted ureas, substituted imidazoles, substituted imidazolines, ureides, hydrazides and hexamethylene tetramine, provided that, in the case where the said accelerator is an imidazoline, the accelerator is not present as a salt of the acid, and

   iii) optionally, at least one difunctional carboxylic acid selected from the group comprising isophthalic acid, terephthalic acid, oxalic acid, succinic acid, adipic acid, citraconic acid, and itaconic acid.

2. A curing agent as claimed in claim 1, wherein the accelerator is selected from the group comprising 2-methyl imidazole, 2-benzylimidazole, 1,2-dimethylimidazole, 3-(4-chlorophenyl)-1,1-dimethylurea, 3-(3,4-dichlorophenyl)-1,1-dimethylurea, 3-phenyl-1,1-dimethylurea, 3-(3-chloro-4-methylphenyl)-1,1-dimethylurea and toluene-2,4-bis (N,N-dimethylcarbamide).

3. A method of curing an epoxy resin based powder coating composition comprising admixing the epoxy resin composition with a curing agent as claimed in claim 1 or 2 and curing the mixture at elevated temperature.

4. A method as claimed in claim 3 wherein the mixture is cured at a temperature in the range of from 170°C to 220°C.

5. A method as claimed in claim 3 or 4 wherein the admixture comprises from 3 to 10 parts by weight of the curing agent per 100 parts by weight of the epoxy resin.

**Claims for the following Contracting State : ES**

1. A process for the preparation of a curing agent for an epoxy resin based powder coating composition characterised in that the process comprises admixing

EP 0 504 183 B1

i) at least one polyfunctional carboxylic acid selected from the group comprising butanetetracarboxylic acid, cyclopentanetetracarboxylic acid, nitrilo triacetic acid, citric acid, aconitic acid, trimellitic acid, pyromellitic acid, trimesic acid, ethylene diamine tetra acetic acid, diethylene triamine penta acetic acid, or mixtures thereof,

ii) a nitrogen containing accelerator selected from the group comprising substituted ureas, substituted imidazoles, substituted imidazolines, ureides, hydrazides and hexamethylene tetramine, provided that, in the case where the said accelerator is an imidazoline, the accelerator is not present as a salt of the acid, and

iii) optionally, at least one difunctional carboxylic acid selected from the group comprising isophthalic acid, terephthalic acid, oxalic acid, succinic acid, adipic acid, citraconic acid and itaconic acid.

2. A process as claimed in claim 1 wherein the accelerator is selected from the group comprising 2-methyl imidazole, 2-benzylimidazole, 1,2-dimethylimidazole, 3-(4-chlorophenyl)-1,1-dimethylurea, 3-(3,4-dichlorophenyl)-1,1-dimethylurea, 3-phenyl-1,1-dimethylurea, 3-(3-chloro-4-methylphenyl)-1,1-dimethylurea and toluene-2,4-bis (N,N-dimethylcarbamide).

3. A method of curing an epoxy resin based powder coating composition comprising admixing a curing agent prepared in accordance with the process of claim 1 of 2, with said epoxy resin composition and curing the mixture at elevated temperature.

4. A method as claimed in claim 3 wherein the mixture is cured at a temperature in the range of from 170°C to 220°C.

5. A method as claimed in claim 3 or 4 wherein the admixture comprises from 3 to 10 parts by weight of the curing agent per 100 parts by weight of the epoxy resin.


**Patentansprüche**
**Patentansprüche für folgende Vertragsstaaten : AT, BE, CH, DE, DK, FR, GB, GR, IT, LI, LU, NL, SE**

1. Härter, geeignet für eine Epoxidharz-Pulverlack-Zusammensetzung, dadurch gekennzeichnet, daß der Härter enthält:
   i) mindestens eine polyfunktionelle Carbonsäure, ausgewählt aus der Gruppe mit Butantetracarbonsäure, Cyclopentantetracarbonsäure, Nitrilotriessigsäure, Citronensäure, Aconitsäure, Trimellitsäure, Pyromellitsäure, Trimesinsäure, Ethylendiamintetraessigsäure, Diethylentriaminpentaessigsäure und deren Gemische;
   ii) einen stickstoffhaltigen Beschleuniger, ausgewählt aus der Gruppe mit substituierte Harnstoffe, substituierte Imidazole, substituierte Imidazoline, Ureide, Hydrazide und Hexamethylentetramin, wobei für den Fall, daß als Beschleuniger ein Imidazolin eingesetzt wird, dieser nicht als Salz einer Säure vorliegt; sowie
   iii) wahlfrei mindestens eine difunktionelle Carbonsäure, ausgewählt aus der Gruppe mit Isophthalsäure, Terephthalsäure, Oxalsäure, Bernsteinsäure, Adipinsäure, Citraconsäure und Itaconsäure.

2. Härter nach Anspruch 1, wobei der Beschleuniger ausgewählt ist aus der Gruppe mit 2-Methylimidazol, 2-Benzylimidazol, 1,2-Dimethylimidazol, 3-(4-Chlorphenyl)-1,1-dimethylharnstoff, 3-(3,4-Dichlorphenyl)-1,1-dimethyl-harnstoff, 3-Phenyl-1,1-dimethyl-harnstoff, 3-(3-Chlor-4-methylphenyl)-1,1-dimethyl-harnstoff und Toluol-2,4-bis(N,N-dimethyl-carbamid).

3. Verfahren zur Härtung einer Epoxidharz-Pulverlack-Zusammensetzung, das umfaßt: Vermischung der Epoxidharz-Zusammensetzung mit einem Härter gemäß Anspruch 1 oder 2 sowie Härtung der Mischung bei erhöhter Temperatur.

4. Verfahren nach Anspruch 3, wobei die Härtung der Mischung in einem zwischen 170°C und 220°C liegenden Temperatur-Bereich erfolgt.

5. Verfahren nach Anspruch 3 oder 4, wobei die Mischung zwischen 3 und 10 Gewichtsteile Härter auf 100 Gewichtsteile Epoxidharz umfaßt.

**Patentansprüche für folgenden Vertraagsstaat : ES**

1. Verfahren zur Herstellung eines Härters für eine Epoxidharz-Pulverlack-Zusammensetzung, dadurch gekennzeichnet, daR der Härter umfaßt:

   i) mindestens eine polyfunktionelle Carbonsäure, ausgewählt aus der Gruppe mit Butantetracarbonsäure, Cyclopentantetracarbonsäure, Nitrilotriessigsäure, Citronensäure, Aconitsäure, Trimellitsäure, Pyromellitsäure, Trimesinsäure, Ethylendiamintetraessigsäure, Diethylentriaminpentaessigsäure und deren Gemische;

   ii) einen stickstoffhaltigen Beschleuniger, ausgewählt aus der Gruppe mit substituierte Harnstoffe, substituierte Imidazole, substituierte Imidazoline, Ureide, Hydrazide und Hexamethylentetramin, wobei für den Fall, daß als Beschleuniger ein Imidazolin eingesetzt wird, dieser nicht als Salz einer Säure vorliegt; sowie

   iii) wahlfrei mindestens eine difunktionelle Carbonsäure, ausgewählt aus der Gruppe mit Isophthalsäure, Terephthalsäure, Oxalsäure, Bernsteinsäure, Adipinsäure, Citraconsäure und Itaconsäure.

2. Verfahren nach Anspruch 1, wobei der Beschleuniger ausgewählt ist aus der Gruppe mit 2-Methylimidazol, 2-Benzylimidazol, 1,2-Dimethylimidazol, 3-(4-Chlorphenyl)-1,1-dimethyl-harnstoff, 3-(3,4-Dichlorphenyl)-1,1-dimethyl-harnstoff, 3-Phenyl-1,1-dimethyl-harnstoff, 3-(3-Chlor-4-methylphenyl)-1,1-dimethyl-harnstoff und Toluol-2,4-bis-(N,N-dimethyl-carbamid).

3. Verfahren zur Härtung einer Epoxidharz-Pulverlack-Zusammensetzung, das umfaßt: Vermischung des gemäß dem Verfahren nach Anspruch 1 oder 2 hergestellten Härters mit der Epoxidharz-Zusammensetzung sowie Härtung der Mischung bei erhöhter Temperatur.

4. Verfahren nach Anspruch 3, wobei die Härtung der Mischung in einem zwischen 170°C und 220°C liegenden Temperatur-Bereich erfolgt.

5. Verfahren nach Anspruch 3 oder 4, wobei die Mischung zwischen 3 und 10 Gewichtsteile Härter auf 100 Gewichtsteile Epoxidharz umfaßt.

**Revendications**
**Revendications pour les Etats contractants suivants : AT, BE, CH, DE, DK, FR, GB, GR, IT, LI, LU, NL, SE**

1. Agent de durcissement pour une composition de revêtement en poudre à base de résine époxy, caractérisé en ce que l'agent de durcissement comprend:

   i) au moins un acide carboxylique polyfonctionnel choisi dans le groupe comprenant l'acide butanetétracarboxylique, l'acide cyclopanetétracarboxylique, l'acide nitrilotriacétique, l'acide citrique, l'acide aconitique, l'acide trimellitique, l'acide pyromellitique, l'acide trimésique, l'acide éthylè-nediamine tétraacétique, l'acide diéthylènetriaminepentaacétique, et leurs mélanges

   ii) un accélérateur contenant de l'azote choisi dans le groupe comprenant les urées substituées, les imidazoles substitués, les imidazolines substituées, les uréides, les hydrazides et l'hexaméthylèneté-tramine, à condition que, dans le cas où ledit accélérateur est une imidazoline, l'accélérateur n'est pas présent sous forme de sel d'acide, et

   iii) éventuellement, au moins un acide carboxylique difonctionnel choisi dans le groupe comprenant l'acide isophtalique, l'acide téréphtalique, l'acide oxalique, l'acide succinique, l'acide adipique, l'acide méthylmaléique, et l'acide itaconique.

2. Agent de durcissement selon la revendication 1, dans lequel l'accélérateur est choisi dans le groupe comprenant le 2-méthylimidazole, le 2-benzylimidazole, le 1,2-diméthylimidazole, la 3-(4-chlorophényl)-1,1-diméthylurée, la 3-(3,4-dichlorophényl)-1,1-diméthylurée, le 3-phényl-1,1-diméthylurée, la 3-(3-chlo-ro-4-méthylphényl)-1,1-diméthylurée et le toluène-2,4-bis(N,N-diméthylcarbamide).

3. Procédé pour durcir une composition de revêtement en poudre à base de résine époxy comprenant le mélange de la composition de résine époxy avec un agent de durcissement selon la revendication 1 ou 2 et le durcissement du mélange à une température élevée.

4. Procédé selon la revendication 3, dans lequel le mélange est durci à une température comprise entre 170°C et 220°C.

5. Procédé selon la revendication 3 ou 4, dans lequel le mélange comprend de 3 à 10 parties en poids de l'agent de durcissement pour 100 parties en poids de la résine époxy.

**Revendications pour l'Etat contractant suivant : ES**

1. Procédé pour la préparation d'un agent de durcissement pour une composition de revêtement en poudre à base de résine époxy, caractérisé en ce que le procédé comprend le mélange:

   i) d'au moins un acide carboxylique polyfonctionnel choisi dans le groupe comprenant l'acide butanetétracarboxylique, l'acide cyclopentanetétracarboxylique, l'acide nitrilotriacétique, l'acide citrique, l'acide aconitique, l'acide trimellitique, l'acide pyromellitique, l'acide trimésique, l'acide éthylènediamine tétraacétique, l'acide diéthylènetriaminepentaacétique, et leurs mélanges

   ii) d'un accélérateur contenant de l'azote choisi dans le groupe comprenant les urées substituées, les imidazoles substitués, les imidazolines substituées, les uréides, les hydrazides et l'hexaméthylènetétramine, à condition que, dans le cas où ledit accélérateur est une imidazoline, l'accélérateur n'est pas présent sous forme de sel d'acide, et

   iii) éventuellement, d'au moins un acide carboxylique difonctionnel choisi dans le groupe comprenant l'acide isophtalique, l'acide téréphtalique, l'acide oxalique, l'acide succinique, l'acide adipique, l'acide méthylmaléique, et l'acide itaconique.

2. Procédé selon la revendication 1, dans lequel l'accélérateur est choisi dans le groupe comprenant le 2-méthylimidazole, le 2-benzylimidazole, le 1,2-diméthylimidazole, la 3-(4-chlorophényl)-1,1-diméthylurée, la 3-(3,4-dichlorophényl)-1,1-diméthylurée, la 3-phényl-1,1-diméthylurée, la 3-(3-chloro-4-méthylphényl)-1,1-diméthylurée et le toluène-2,4-bis(N,N-diméthylcarbamide).

3. Procédé pour durcir une composition de revêtement en poudre à base de résine époxy comprenant le mélange d'un agent de durcissement préparé conformément au procédé selon la revendication 1 ou 2, avec ladite composition de résine époxy et le durcissement du mélange à une température élevée.

4. Procédé selon la revendication 3, dans lequel le mélange est durci à une température comprise entre 170°C et 220°C.

5. Procédé selon la revendication 3 ou 4, dans lequel le mélange comprend de 3 à 10 parties en poids de l'agent de durcissement pour 100 parties en poids de la résine époxy.